# EUROPEAN PATENT APPLICATION

(11) **EP 3 398 986 A1**
(43) Date of publication of application: **07.11.2018**
(21) Application number: 16883895.1
(22) Date of filing: 28.12.2016
(51) Int. Cl.: C08J 9/00, C08J 9/08, C08L 71/02, B29C 44/00

(54) **MODIFIED SILICONE RESIN FOAM**

(30) Priority: 08.01.2016 JP 2016002710
(71) Applicant: Kaneka Corporation, Osaka-shi, Osaka 530-8288 (JP)
(72) Inventor: KATANO, Chiaki, Settsu-shi Osaka 566-0072 (JP)
(74) Representative: Vossius & Partner Patentanwälte Rechtsanwälte mbB
(86) International application number: PCT/JP2016/089118
(87) International publication number: WO 2017/119396

(57) **Abstract**

Provided is a modified silicone resin foam which can be foam-molded without generating hydrogen as a byproduct, while maintaining excellent tactile properties or flexibility. The present invention is a modified silicone resin foam obtained by curing a foamable liquid resin composition including 100 parts by weight of a base material resin (A), 0.1-5 parts by weight of a silanol condensation catalyst, and 2-40 parts by weight of a chemical foaming agent, the modified silicone resin foam characterized in that the 100 parts by weight of the base material resin (A) comprises 65-95 parts by weight of a polymer (a) and 5-35 parts by weight of a reactive plasticizer, the polymer (a) has 1.0 to 2.0 reactive silicon groups in the molecular chain thereof, the main chain thereof comprising a polymer configured from oxyalkylene-based units, the reactive plasticizer (b) has 1.0 or fewer reactive silicon groups at one terminal end of the molecular chain thereof, the main chain thereof comprising a polymer configured from oxyalkylene-based units, and the elongation of the foam is 300-1000% in a 25°C atmosphere.

## Description

### TECHNICAL FIELD

The present invention relates to a modified silicone resin foam obtained by curing a foamable liquid resin composition which includes a polymer containing a silicon group, a silanol condensation catalyst, and a chemical foaming agent, in which the silicon group has a hydrolyzable group bonded to a silicon atom and can be crosslinked by forming a siloxane bond (hereinafter, referred to as a "reactive silicon group").

### BACKGROUND ART

Among foams of polymer compounds, foams using thermoplastic resins like polystyrene, polyethylene, polypropylene, and polyvinyl chloride are known. In the form of beads, sheets, or boards, those foams have been used in fields such as civil engineering and construction, packaging, home electronics, and automobiles by taking advantage of their properties like heat insulation, lightweight, and cushioning. Those foams all require large-scale facilities for producing molded articles. Moreover, they are usually hard foams.

Polyurethane foams are well known as foams obtained by curing and foaming of liquid resin compositions using thermosetting resins. Polyurethane foams can be easily formed in small-scale facilities, and can be produced as soft foams as well (Patent Document 1). However, it cannot be said that the polyurethane foams have sufficient flexibility and good tactile properties. Therefore, there is a demand for foams that are easy to mold and that have flexibility and good tactile properties.

Meanwhile, foams can also be produced from modified silicone resins depending on the conditions. Patent Document 2 discloses a curable composition containing a modified silicone resin and pre-foamed hollow particles, but the produced cured product is not a foam and has high hardness with a lack of flexibility. Furthermore, Patent Document 3 discloses a curable composition which contains a modified silicone resin and an additive, but the produced curable composition is not foamed even though the high elongation is maintained, and by not having sufficient flexibility, it cannot be said that it has good tactile properties. Patent Document 4 discloses a modified silicone resin foam which has better tactile properties than the conventional polyurethane foams as a soft foam and also has excellent flexibility like low hardness and low rebound resilience, and which is suitable as a material for bedclothes, various cushion materials, and the like. Patent Document 5 discloses a foam having a silicone-based polymer as a base material resin, which has low density and excellent flexibility and shock absorbing property and is desirably used as a shock absorbing body for medical use or the like. However, for the foams described in Patent Documents 4 and 5, a hydrosilylation reaction is employed as a curing reaction, and there is a possibility that hydrogen gas having a high risk of explosion is generated as a byproduct during the foam production depending on the use conditions.

Patent Document 1: Japanese Unexamined Patent Application, Publication No. 2014-162813
Patent Document 2: Japanese Unexamined Patent Application, Publication No. 2013-237815
Patent Document 3: Japanese Unexamined Patent Application, Publication No. 1999-241013
Patent Document 4: Japanese Unexamined Patent Application, Publication No. 2012-122021
Patent Document 5: PCT International Publication No. WO2008/117734

### DISCLOSURE OF THE INVENTION

### Problems to be Solved by the Invention

In view of the above, an object of the present invention is to provide a modified silicone resin foam that can be foamed without being accompanied with generation of hydrogen as a byproduct, while maintaining excellent tactile properties and flexibility, and high elongation.

### Means for Solving the Problems

As a result of extensive research on the above problems, the present inventors have found that, if a polymer containing a reactive silicon group and having a unit for constituting the main chain thereof configured from oxyalkylene-based units is combined with a silanol condensation catalyst and a chemical foaming agent, a modified silicone resin foam having high flexibility can be obtained without generating hydrogen gas having a high risk of explosion as a byproduct during the foam production, and therefore completed the present invention.

Namely, the present invention has the following constitutions.
1) A modified silicone resin foam obtained by curing a foamable liquid resin composition including 100 parts by weight of a base material resin (A), 0.1 to 5 parts by weight of a silanol condensation catalyst (B), and 2 to 40 parts by weight of a chemical foaming agent (C),
   in which the 100 parts by weight of the base material resin (A) is composed of 65 to 95 parts by weight of a polymer (a) and 5 to 35 parts by weight of a reactive plasticizer (b), the polymer (a) is composed of a polymer which has 1.0 to 2.0 reactive silicon groups in the molecular chain thereof and has the main chain thereof configured from oxyalkylene-based units,
   the reactive plasticizer (b) is composed of a polymer which has 1.0 or fewer reactive silicon groups at one terminal end of the molecular chain thereof and has the main chain thereof configured from oxyalkylene-based units, and
   the elongation of the foam is 300 to 1000% in a 25°C atmosphere.
2) The modified silicone resin foam described in 1), in which the polymer (a) is a polymer having number average molecular weight of 3000 or more and 100000 or less.
3) The modified silicone resin foam described in 1) or 2), in which the reactive plasticizer (b) is a polymer having number average molecular weight of 2000 or more and 20000 or less.
4) The modified silicone resin foam described in any one of 1) to 3), in which the silanol condensation catalyst (B) is an acidic organophosphoric acid ester compound.
5) The modified silicone resin foam described in any one of 1) to 4), in which the silanol condensation catalyst (B) is an acidic organophosphoric acid ester compound that is represented by the general formula (1):

   (CₘH₂ₘ₊₁O)ₙ-P(=O)(-OH)₃₋ₙ

   (in the formula, m is an integer of 4 to 10 and n is an integer of 0 to 3).
6) The modified silicone resin foam described in any one of 1) to 5), in which the chemical foaming agent (C) is any one combination selected from bicarbonates, organic acids, and organic acid salts, bicarbonates and organic acids, and bicarbonates and organic acid salts.
7) The modified silicone resin foam described in 6), in which the organic acids are polyvalent carboxylic acids.
8) The modified silicone resin foam described in 6) or 7), in which the organic acid salts are metal salts of polyvalent carboxylic acids.
9) The modified silicone resin foam described in any one of 1) to 8), in which the foam has density of 10 kg/m³ or more and 900 kg/m³ or less.
10) A method for producing a modified silicone resin foam described in any one of 1) to 9).
11) The method for producing a modified silicone resin foam described in 10), in which the foamable liquid resin composition is injected into a mold, and then subjected to foaming and curing.
12) The method for producing a modified silicone resin foam described in 10) or 11), in which the foaming of the foamable liquid resin composition is carried out before or simultaneously with the curing.

### Effects of the Invention

The modified silicone resin foam of the present invention is not accompanied with generation of hydrogen as a byproduct during molding, while it maintains excellent tactile properties and flexibility, and high elongation.

As the modified silicone resin foam of the present invention has excellent tactile properties and flexibility, it is suitably used as a material for bedclothes, various cushion materials, and the like. Furthermore, since hydrogen gas having a high risk of explosion is not generated in the reaction during the foam production, the foam can be produced in facilities with low equipment burden.

### PREFERRED MODE FOR CARRYING OUT THE INVENTION

The present invention is described in detail below.

The modified silicone resin foam of the present invention is formed of a cured product of a foamable liquid resin composition which includes 100 parts by weight of a base material resin (A), 0.1 to 5 parts by weight of a silanol condensation catalyst (B), and 2 to 40 parts by weight of a chemical foaming agent (C). The base material resin (A) is composed of 65 to 95 parts by weight of a polymer (a) and 5 to 35 parts by weight of a reactive plasticizer (b). The polymer (a) is composed of a polymer which has 1.0 to 2.0 reactive silicon groups in the molecular chain thereof and has the main chain thereof configured from oxyalkylene-based units. The reactive plasticizer (b) is composed of a polymer which has 1.0 or fewer reactive silicon groups at one terminal end of the molecular chain thereof and has the main chain thereof configured from oxyalkylene-based units. The elongation of the foam is 300 to 1000% in a 25°C atmosphere. The elongation described in the present invention is defined as the maximum elongation (%) at breakage of a test specimen according to an elongation test.

### <Foamable liquid resin composition>

The base material resin (A), the silanol condensation catalyst (B), and the chemical foaming agent (C), which are the constitutional components of the foamable liquid resin composition, are described.

### <Base material resin (A)>

The base material resin (A) is composed of 65 to 95 parts by weight of a polymer (a) and 5 to 35 parts by weight of a reactive plasticizer (b). The polymer (a) has 1.0 to 2.0 reactive silicon groups in the molecular chain thereof and has the main chain thereof configured from oxyalkylene-based units. The polymer (a) undergoes a condensation reaction as caused by the silanol condensation catalyst (B), and acquires a polymer shape according to crosslinking and becomes cured. The reactive plasticizer (b) has 1.0 or fewer reactive silicon groups at one terminal end of the molecular chain thereof and has the main chain thereof configured from oxyalkylene-based units. The reactive plasticizer (b) has a condensation reaction as caused by the silanol condensation catalyst (B), and according to crosslinking with the reactive silicon group in the polymer (a), it becomes to have a polymer shape and cured.

Number of the reactive silicon groups contained in the polymer (a) is 1.0 or more and 2.0 or less in the molecular chain thereof. Considering that it undergoes a condensation reaction by an action of the silanol condensation catalyst (B), at least 1.0 group is required on average in one molecule of the polymer, and it is preferably present at 1.1 groups or more, and more preferably 1.2 groups or more. If the average number is less than 1.0, the curability may be insufficient, and if the average number is more than 2.0, the cured product may be hard. In view of the curability and flexibility, the reactive silicon group is preferably present at both terminal ends of the main chain or molecular chain of a branched part.

Number of the reactive silicon groups contained in the reactive plasticizer (b) is 1.0 or fewer at one terminal end of the molecular chain thereof. Considering that it undergoes a partial condensation reaction with the polymer (A) as caused by the silanol condensation catalyst (B) to yield crosslinking, at least 0.3 group is required on average in one molecule of the polymer, and it is preferably present at 0.4 group or more, and more preferably 0.5 group or more. If the average number is less than 0.3, the curability may be insufficient, and if the average number is more than 1.0, the cured product may be hard. Furthermore, in view of the flexibility, the reactive silicon group is preferably present at one terminal end of the main chain or molecular chain of a branched part.

The average number of the reactive silicon groups can be determined by a quantification method which uses a ¹H-NMR instrument. The reactive silicon group contained in the base material resin (A) is a group which has a hydroxy group or a hydrolyzable group bonded to a silicon atom and can be crosslinked by forming a siloxane bond through a reaction accelerated by the silanol condensation catalyst. The reactive silicon group may be a group represented by the general formula (2):

-SiR¹₃₋ₚXₚ (2)

(each R¹ independently represents an alkyl group having 1 to 20 carbon atoms, an aryl group having 6 to 20 carbon atoms, an aralkyl group having 7 to 20 carbon atoms, or a triorganosiloxy group represented by -OSi(R')₃ (each R' independently represents a hydrocarbon group having 1 to 20 carbon atoms). Furthermore, each X independently represents a hydroxy group or a hydrolyzable group. Furthermore, p represents an integer of 1 to 3).

The hydrolyzable group is not particularly limited, and it may be any known hydrolyzable group. Specific examples include a hydrogen atom, a halogen atom, an alkoxy group, an acyloxy group, a ketoximate group, an amino group, an amide group, an acid amide group, an aminooxy group, a mercapto group, and an alkenyloxy group. Preferred among them are a hydrogen atom, an alkoxy group, an acyloxy group, a ketoximate group, an amino group, an amide group, an aminooxy group, a mercapto group, and an alkenyloxy group, and an alkoxy group is particularly preferred in that it has mild hydrolyzability, and thus is easy to handle. Preferred alkoxy groups are a methoxy group and an ethoxy group.

One to three hydrolyzable group or hydroxy group can be bonded to one silicon atom. When there are two or more bonded hydrolyzable groups or hydroxy groups in the reactive silicon group, those groups may be the same or different from each other.

In the general formula (2), p is preferably 2 or 3 in view of the curability, and, in particular, it is preferably 3 when rapid curing is required, and it is preferably 2 when stability during storage is required.

Specific examples of R¹ in the general formula (2) include alkyl groups such as a methyl group and an ethyl group; cycloalkyl groups such as a cyclohexyl group; aryl groups such as a phenyl group; aralkyl groups such as a benzyl group; and triorganosiloxy groups represented by -OSi(R')₃ in which R' is a methyl group, a phenyl, or the like, a chloromethyl group, and a methoxymethyl group. A methyl group is particularly preferred among them.

More specific examples of the reactive silicon group include a trimethoxysilyl group, a triethoxysilyl group, a triisopropoxysilyl group, a dimethoxymethylsilyl group, a diethoxymethylsilyl group, and a diisopropoxymethylsilyl group. A trimethoxysilyl group, a triethoxysilyl group, and a dimethoxymethylsilyl groups are preferred because they are highly active and provide good curability.

The structure of the base material resin (A) may have a linear chain or a branched structure within a range in which the molecular weight of the branches is lower than that of the main chain, but in view of the flexibility, it preferably is a linear chain.

As for the molecular weight of the polymer (a), the number average molecular weight is preferably 3000 or more, and more preferably 10000 or more, in view of the balance between flexibility/tactile properties and reactivity. The upper limit of the number average molecular weight is not particularly limited, but it is preferably 100000 or less, more preferably 50000 or less, and still more preferably 30000 or less. If the number average molecular weight is less than 3000, this will not only lead to a decrease in viscosity, making it difficult to allow the curing reaction to proceed, but may also adversely affect tactile properties. If the number average molecular weight is more than 100000, this may not only adversely affect tactile properties but may also deteriorate workability due to an increase in viscosity. As for the molecular weight of the reactive plasticizer (b), the number average molecular weight is preferably 2000 or more and 20000 or less, and more preferably 3000 or more and 15000 or less, in view of the balance in reactivity. If the number average molecular weight is less than 2000, this will not only lead to a decrease in viscosity, yielding a slow curing reaction, but may also cause early completion of the foaming reaction, thus yielding a foam with low foaming ratio. If the number average molecular weight is more than 20000, high viscosity is yielded to adversely affect tactile properties, and thus there is a possibility that it does not function as a plasticizer. Furthermore, the number average molecular weight can be calculated by a calibration method with polystyrene standards which uses GPC.

Furthermore, the polymer (a) may consist of a combination of two or more types of a polymer. When the polymer (a) is a mixture of two or more types of a polymer, the number average molecular weight of the mixture is preferably within the range indicated above.

Furthermore, polymers other than those described above may be added to the polymer (a) for the purpose of controlling flexibility, tactile properties, crosslinked structure, or the like.

The base material resin (A) of which main chain is configured from oxyalkylene-based units can be produced by polymerization of an alkylene oxide using a compound having two or more active hydrogen atoms as a starting material for forming the main chain. For example, it can be produced by polymerizing a C2 to C4 alkylene oxide using ethylene glycol, propylene glycol, bisphenol compounds, glycerol, trimethylolpropane, or pentaerythritol as a starting material.

Specific examples of the main chain of the base material resin (A) include polyethylene oxide, polypropylene oxide, polybutylene oxide, and; random or block copolymers of two or more monomers selected from ethylene oxide, propylene oxide, and butylene oxide. With regard to the base material resin (A), it is preferable that an alkenyl group is introduced to at least one terminal end of the main chain selected from a group of those. In view of the flexibility and tactile properties, the repeating unit of the main chain is more preferably polypropylene oxide. As a method for introducing the reactive silicon group into the main chain skeleton of the polymer, it is not particularly limited, and it can be carried out by a known method such as one disclosed in International Publication No. 2014/073593, for example.

### <Silanol condensation catalyst (B)>

As for the silanol condensation catalyst for reacting a polymer which has a reactive silicon group and has a unit for constituting the main chain thereof configured from oxyalkylene-based units, it is not particularly limited as long as it can be used as a silanol condensation catalyst, and any catalyst can be used.

Specific examples of the silanol condensation catalyst (B) include dialkyl tin dicarboxylates such as dibutyl tin dilaurate, dibutyl tin diacetate, dibutyl tin diethylhexanoate, dibutyl tin dioctate, dibutyl tin dimethylmalate, dibutyl tin diethylmalate, dibutyl tin dibutylmalate, dibutyl tin diisooctylmalate, dibutyl tin ditridecylmalate, dibutyl tin dibenzylmalate, dibutyl tin maleate, dioctyl tin diacetate, dioctyl tin distearate, dioctyl tin dilaurate, dioctyl tin diethylmalate, and dioctyl tin diisooctylmalate, dialkyl tin alkoxides such as dibutyl tin dimethoxide and dibutyl tin diphenoxide, intramolecular coordination derivatives of dialkyl tins, such as dibutyl tin diacetylacetonate and dibutyl tin diethylacetoacetate, reaction products of dialkyl tin oxides such as dibutyl tin oxide and dioctyl tin oxide with ester compounds such as dioctyl phthalate, diisodecyl phthalate, and methyl maleate, tin compounds obtained by reaction of dialkyl tin oxides, carboxylic acids, and alcohol compounds; reaction products of dialkyl tin oxides with silicate compounds, such as dibutyl tin bistriethoxysilicate and dioctyl tin bistriethoxysilicate; and tetravalent tin compounds such as oxy derivatives of the foregoing dialkyl tin compounds (stannoxane compounds); divalent tin compounds such as tin octoate, tin naphthenate, tin stearate, and tin versatate, and reaction products and mixtures thereof with amine compounds such as laurylamine, which will be described later; monoalkyl tins such as monobutyl tin compounds such as monobutyl tin trisoctoate and monobutyl tin triisopropoxide and monooctyl tin compounds; titanic acid esters such as tetrabutyl titanate, tetrapropyl titanate, tetra(2-ethylhexyl) titanate, and isopropoxytitanium bis(ethylacetoacetate); organoaluminum compounds such as aluminum trisacetylacetonate, aluminum trisethylacetoacetate, and diisopropoxyaluminum ethylacetoacetate; metal salts of carboxylic acids like 2-ethylhexanoic acid, neodecanoic acid, versatic acid, oleic acid, and naphthenic acid such as bismuth carboxylates, iron carboxylates, titanium carboxylates, lead carboxylates, vanadium carboxylates, zirconium carboxylates, calcium carboxylates, potassium carboxylates, barium carboxylates, manganese carboxylates, cerium carboxylates, nickel carboxylates, cobalt carboxylates, zinc carboxylates, and aluminum carboxylates, and reaction products and mixtures thereof with amine compounds such as laurylamine, which will be described later; chelate compounds such as zirconium tetraacetylacetonate, zirconium tributoxyacetylacetonate, dibutoxyzirconium diacetylacetonate, zirconium acetylacetonate bis(ethylacetoacetate), and titanium tetraacetylacetonate; aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines such as dimethylamine, diethylamine, dipropylamine, diisopropylamine, dibutylamine, diamylamine, dioctylamine, di(2-ethylhexyl)amine, didecylamine, dilaurylamine, dicetylamine, distearylamine, methylstearylamine, ethylstearylamine, and butylstearylamine; aliphatic tertiary amines such as triamylamine, trihexylamine, and trioctylamine; aliphatic unsaturated amines such as triallylamine and oleylamine; aromatic amines such as laurylaniline, stearylaniline, and triphenylamine; and other amines such as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, 1,8-diazabicyclo(5,4,0)undecene-7 (DBU) and other amine compounds, and salts of the foregoing amine compounds with carboxylic acids or other acids; reaction products and mixtures of amine compounds and organotin compounds, such as reaction products and mixtures of laurylamine and tin octoate; low-molecular-weight polyamide resins obtained from an excess of polyamines and polybasic acids; reaction products of an excess of polyamines with epoxy compounds; and other compounds including γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(β-aminoethyl)aminopropyltrimethoxysilane, N-(β-aminoethyl)aminopropylmethyldimethoxysilane, N-(β-aminoethyl)aminopropyltriethoxysilane, N-(β-aminoethyl)aminopropylmethyldiethoxysilane, N-(β-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane. Furthermore, a silanol condensation catalysts like derivatives obtained by modifying the above compounds, such as amino group-containing silane coupling agents, e.g., amino-modified silyl polymers, silylated amino polymers, unsaturated aminosilane complexes, phenylamino long-chain alkyl silanes, and aminosilylated silicones; as well as known silanol condensation catalysts including fatty acids like versatic acid and other acidic catalysts such as acidic organophosphoric acid ester compounds, and basic catalysts can be exemplified.

They may be used either singly or in combination of two or more types thereof.

Examples of the acidic organophosphoric acid ester compound as an acidic catalyst include (CH₃O)₂-P(=O)(-OH), (CH₃O)-P(=O)(-OH)₂, (C₂H₅O)₂-P(=O)(-OH), (C₂H₅O)-P(=O)(-OH)₂, (C₃H₇O)₂-P(=O)(-OH), (C₃H₇O)-P(=O)(-OH)₂, (C₄H₉O)₂-P(=O)(-OH), (C₄H₉O)-P(=O)(-OH)₂, (C₈H₁₇O)₂-P(=O)(-OH), (C₈H₁₇O)-P(=O)(-OH)₂, (C₁₀H₂₁O)₂-P(=O)(-OH), (C₁₀H₂₁O)-P(=O)(-OH)₂, (C₁₃H₂₇O)₂-P(=O)(-OH), (C₁₃H₂₇O)-P(=O)(-OH)₂, (C₁₆H₃₃O)₂-P(=O)(-OH), (C₁₆H₃₃O)-P(=O)(-OH)₂, (HO-C₆H₁₂O)₂-P(=O)(-OH), (HO-C₆H₁₂O)-P(=O)(-OH)₂, (HO-C₈H₁₆O)₂-P(=O)(-OH), (HO-C₈H₁₆O)-P(=O)(-OH)₂, [(CH₂OH)(CHOH)CH₂O]₂-P(=O)(-OH), [(CH₂OH)(CHOH)CH₂O]-P(=O)(-OH)₂, [(CH₂OH)(CHOH)C₂H₄O]₂-P(=O)(-OH), and [(CH₂OH)(CHOH)C₂H₄O]-P(=O)(-OH)₂, but it is not limited to the exemplified materials.

From the viewpoint of avoiding inhibition of the foaming reaction caused by the chemical foaming agent (C) and further avoiding inhibition of the curing reaction, i.e., to allow both the foaming and curing reactions to proceed in a favorably balanced manner, among the silanol condensation catalysts (B) that are exemplified above, an acidic organophosphoric acid ester compound is preferable. As for the acidic organophosphoric acid ester compound, a compound having a structure represented by the general formula (1):

(CₘH₂ₘ₊₁O)ₙ-P(=O)(-OH)₃₋ₙ

(in which m is an integer of 4 to 10 and n is an integer of 0 to 3) is more preferable. If m is less than 4, the curing reaction tends to proceed slowly, making it difficult to control the balance with foaming reactions, with the result that the foam tends to remain uncured. In the general formula (1), n is more preferably 1 or 2.

Content of the silanol condensation catalyst (B) in the foamable liquid resin composition is 0.1 to 5 parts by weight, preferably 0.1 to 3 parts by weight, and more preferably 0.1 to 2.5 parts by weight relative to 100 parts by weight of the base material resin (A). If the content of the silanol condensation catalyst (B) is less than 0.1 parts by weight, curing may not sufficiently proceed. Furthermore, if the content of the silanol condensation catalyst (B) is more than 5 parts by weight, the curing of the liquid resin composition may be difficult to control, or the resulting modified silicone resin foam may be colored.

### <Chemical foaming agent (C)>

In the present invention, the chemical foaming agent (C) is not particularly limited, but it is preferably any one combination selected from bicarbonates, organic acids, and organic acid salts, bicarbonates and organic acids, and bicarbonates and organic acid salts. The chemical foaming agent consisting of bicarbonates, organic acids, and organic acid salts, bicarbonates and organic acids, or bicarbonates and organic acid salts is a compound that generates carbon dioxide gas in conjunction with the curing reaction (silanol condensation reaction) of the base material resin (A) which is caused by the silanol condensation catalyst (B) in the present invention, and no combustible gas such as hydrogen is generated, and therefore it is possible to produce the foam without the need of having a fire-resistant and explosion-resistant facility.

The bicarbonates are not particularly limited, but from the viewpoint that they are advantageously decomposed in the temperature range in which the curing reaction (silanol condensation reaction) of the base material resin (A) caused by the silanol condensation catalyst (B) properly proceeds, sodium hydrogen carbonate and ammonium hydrogen carbonate are preferable.

As for the organic acids, polyvalent carboxylic acids are preferable. Specific examples thereof include citric acid, oxalic acid, fumaric acid, phthalic acid, malic acid, and tartaric acid.

As for the organic acid salts, metal salts of polyvalent carboxylic acids are preferable. Specific examples thereof include metal salts like sodium, potassium, calcium, magnesium, ammonium, aluminum, and zinc salts of the above organic acids.

Each of the bicarbonates, organic acids, and organic acid salts may be used either singly or in combination of two or more types thereof.

Content of the chemical foaming agent (C) in the foamable liquid resin composition is 2 to 40 parts by weight, and preferably 5 to 30 parts by weight relative to 100 parts by weight of the base material resin (A). If the content of the chemical foaming agent (C) is less than 2 parts by weight, curing may proceed without sufficient foaming, resulting in a foam having poor flexibility and a low foaming ratio. If the content of the chemical foaming agent (C) is more than 40 parts by weight, foaming may occur to a significant extent as compared to curing, resulting in a defective foam with larger foam cells or the like.

The content of the bicarbonates relative to 100 parts by weight of the base material resin (A) is preferably at least 1 part by weight but not more than 36 parts by weight, and more preferably at least 2 parts by weight but not more than 25 parts by weight.

Furthermore, the weight ratio of the bicarbonates to the organic acids and/or organic acid salts (bicarbonates)/(organic acids + organic acid salts), (bicarbonates)/(organic acids), or (bicarbonates)/(organic acid salts) is preferably at least 1/10 but not more than 10, and more preferably at least 1/5 but not more than 5. If the amount of the bicarbonates is less than 1 part by weight or if the weight ratio of the bicarbonates to the organic acids and/or organic acid salts is less than 1/10, the amount of carbon dioxide gas generated by pyrolysis tends to be small, resulting in a decrease in foaming ratio. If the amount of the bicarbonates is more than 36 parts by weight or if the weight ratio of the bicarbonates to the organic acids and/or organic acid salts is more than 10, the amount of carbon dioxide gas generated by pyrolysis may be high, resulting in a defective foam with larger foam cells or the like due to imbalance between foaming and curing.

Examples of other chemical foaming agents include organic pyrolytic foaming agents such as azo compounds, nitroso compounds, hydrazine derivatives, semicarbazide compounds, tetrazole compounds, and trihydrazinotriazine; and inorganic pyrolytic foaming agents such as carbonates and nitrites.

Examples of the azo compounds include azodicarbonamide (ADCA), azobisisobutyronitrile (AIBN), barium azodicarboxylate, and diazoaminobenzene. Examples of the nitroso compounds include dinitroso pentamethylene tetramine (DPT). Examples of the hydrazine derivatives include p,p'-oxybis(benzenesulfonylhydrazide) (OBSH), p-toluenesulfonyl hydrazide (TSH), and hydrazodicarbonamide (HDCA).

Examples of the semicarbazide compounds include p-toluenesulfonyl semicarbazide. Examples of the tetrazole compounds include 5-phenyltetrazole, 1H-tetrazole salts, and, 1,4-bistetrazole.

Examples of the carbonates include sodium carbonate and ammonium carbonate.

Examples of the nitrites include ammonium nitrite.

They may be used either singly or in combination of two or more types thereof.

The chemical foaming agent (C) according to the present invention may be a thermally expandable microcapsule. The thermally expandable microcapsule contains in a thermoplastic shell polymer a volatile liquid that converts to a gas state at a temperature equal to or lower than the softening point of the shell polymer, and when the thermally expandable microcapsule is heated, the volatile liquid converts to gas while the shell polymer softens and expands simultaneously.

### <Other additives>

In the modified silicone resin foam of the present invention, a light-resistant stabilizer, an ultraviolet absorbing agent, a storage stabilizer, a foam regulating agent, a lubricant, or the like may be added, if necessary, as long as the effects of the present invention are not impaired.

Examples of the light-resistant stabilizer include hindered phenol antioxidants and hindered amine light stabilizers free of sulfur and phosphorus atoms and primary and secondary amines. As described herein, the light-resistant stabilizer indicates a compound having a function to absorb light having a wavelength in the ultraviolet range to inhibit generation of radicals, a function to capture radicals generated by absorption of light and convert the radicals into thermal energy to detoxify them, or the like function, thus increasing stability to light.

The ultraviolet absorbing agent is not particularly limited, and examples include benzoxazine ultraviolet absorbing agents, benzophenone ultraviolet absorbing agents, benzotriazole ultraviolet absorbing agents, and triazine ultraviolet absorbing agents. Herein, the ultraviolet absorbing agent refers to a compound having a function to absorb light having a wavelength in the ultraviolet range to inhibit generation of radicals.

The addition amounts of the light-resistant stabilizer and the ultraviolet absorbing agent are each preferably at least 0.01 parts by weight but not more than 5 parts by weight, more preferably at least 0.1 parts by weight but not more than 3 parts by weight, and still more preferably at least 0.3 parts by weight but not more than 2.0 parts by weight relative to 100 parts by weight of the base material resin (A) in order to easily obtain the effect of inhibiting the increase in surface tackiness over time.

Preferred examples of the storage stability improving agent include compounds containing aliphatic unsaturated bonds, organophosphorus compounds, organosulfur compounds, nitrogen-containing compounds, tin compounds, and organic peroxides. They may be used either singly or in combination of two or more types thereof. Specific examples thereof include 2-benzothiazolyl sulfide, benzothiazole, thiazole, dimethylacetylene dicarboxylate, diethylacetylene dicarboxylate, 2,6-di-t-butyl-4-methylphenol, butylhydroxyanisole, vitamin E, 2-(4-morphodinyldithio)benzothiazole, 3-methyl-1-buten-3-ol, acetylenic unsaturated group-containing organosiloxanes, acetylene alcohol, 3-methyl-1-butyn-3-ol, 2-methyl-3-butyn-2-ol, diallyl fumarate, diallyl maleate, diethyl fumarate, diethyl maleate, dimethyl maleate, 2-pentenenitrile, and 2,3-dichloropropene.

The foam regulating agent is not particularly limited, and commonly used foam regulating agents may be used, including inorganic solid powders such as talc, calcium carbonate, magnesium oxide, titanium oxide, zinc oxide, carbon black, and silica; silicone oil compounds such as polyether modified silicone oils; and fluorine compounds. Those foam regulating agents may be used either singly or in combination of two or more types thereof.

The use amount of the foam regulating agent is preferably at least 0.1 parts by weight but not more than 100 parts by weight, and more preferably at least 0.5 parts by weight but not more than 50 parts by weight relative to 100 parts by weight of the total amount of the base material resin (A) and the silanol condensation catalyst (B).

The lubricant can improve the compatibility of the foamable liquid resin composition that is obtained by containing the base material resin (A), the silanol condensation catalyst (B), and the chemical foaming agent (C). With the use of a lubricant, it is also possible to reduce friction or adhesion within the foam cells of a foam produced by foaming the foamable liquid resin composition, so as to allow obtainment of the foam having a desired tactile properties or flexibility. In addition, the lubricant tends to be retained in a three-dimensional network structure formed by a silanol condensation reaction between the base material resins (A) and have inhibited bleed out to the outside of the foam system, and therefore, the foam can maintain the tactile properties or flexibility for a long period of time.

The lubricant is preferably a liquid lubricant. Specific examples of the liquid lubricant include paraffinic mineral oils, naphthenic mineral oils, animal or vegetable oils such as fatty acid glycerides; olefinic lubricants having an alkyl structure such as poly-1-decene and polybutene; alkyl aromatic compound lubricants having an aralkyl structure; polyalkylene glycol lubricants; ether lubricants such as polyalkylene glycol ethers, perfluoropolyethers, and polyphenyl ethers; ester lubricants having an ester structure such as aliphatic acid esters, aliphatic acid diesters, polyol esters, silicic acid esters, and phosphoric acid esters; silicone lubricants such as dimethyl silicone (i.e., dimethylpolysiloxane capped with a trimethylsiloxy group at both ends) and silicone oils in which the methyl groups of dimethyl silicone are partially replaced with a polyether group, a phenyl group, an alkyl group, an aralkyl group, a fluorinated alkyl group, or the like; and fluorine atom-containing lubricants such as chlorofluorocarbon. Those lubricants may be used either singly or in combination of two or more types thereof.

Among them, silicone lubricants are particularly preferred in the present invention from the viewpoint of reducing the frictional coefficient within foam cells and having dispersibility, processability, safety, and the like.

The addition amount of the lubricant is preferably 1 part by weight or more, more preferably 2 parts by weight or more, and still more preferably 3 parts by weight or more relative to 100 parts by weight of the base material resin (A). If the amount is less than 1 part by weight, the friction or adhesion within foam cells is not sufficiently inhibited, thus it is difficult to obtain desired tactile properties or flexibility. The upper limit of the lubricant is not particularly limited, but it is preferably 25 parts by weight or less, and more preferably 20 parts by weight or less. If it is more than 25 parts by weight, the resulting foam tends to have a reduced foaming ratio or the lubricant tends to bleed out to the outside of the system.

### <Modified silicone resin foam>

The elongation of the modified silicone resin foam is 300% to 1000%. It is more preferably 330% to 950%, still more preferably 380% to 930%, and particularly preferably 400% to 900%. As the elongation percentage is within this range, it can be described as a foam which exhibits favorable strength while maintaining high elongation. If the elongation is higher than 1000%, the strength as a foam is low so that there is a possibility of having a problem in actual use.

The modified silicone resin foam of the present invention preferably has a density of 900 kg/m³ or less, more preferably 500 kg/m³ or less, still more preferably 350 kg/m³ or less, particularly preferably 300 kg/m³ or less, and most preferably 250 kg/m³ or less. As the density is 900 kg/m³ or less, when the foam is prepared as a product such as bedclothes or cushions, for example, the product is expected to be relatively light and easy to carry in daily life. The lower limit of the density of the foam is not particularly limited, but the density is preferably 10 kg/m³ or more, more preferably 50 kg/m³ or more, still more preferably 100 kg/m³ or more, and particularly preferably 150 kg/m³ or more. If it is less than 10 kg/m³, when used for bedclothes, cushions or the like, the foam may touch the bottom due to compression.

The modified silicone resin foam of the present invention has an ASKER FP hardness of 60 or less in a 25°C atmosphere. The ASKER FP hardness is a value that is determined with an ASKER FP hardness tester. The ASKER FP hardness is preferably 40 or less, and particularly preferably 0. It is considered that an ASKER FP hardness of 60 or less indicates flexible tactile properties.

Examples of the foam of the modified silicone resin foam include, although not particularly limited, plate form, sheet form, indeterminate lump form, bead form, and those molded to bag form or garment form or the like. The foam may be used alone or may be used after being integrated with different foams such as polyurethane foams, gels, plastics, rubbers, films, fibrous products such as cloth and nonwoven fabrics, or materials such as paper.

Furthermore, cloth or nonwoven fabric made of cotton, acrylic fibers, wool, polyester fibers, or other materials may be bonded to the surface of the modified silicone resin foam of the present invention, appropriately using an adhesive. Such bonding can further improve the tactile properties of the foam and can also, depending on the application, provide a sweat absorption effect via the bonded cloth during perspiration under exercise or in hot and humid conditions.

The shape of the modified silicone resin foam of the present invention is not particularly limited, and examples thereof include polygons such as rectangle, square, circle, ellipse, and rhombus shapes, a strip shape, a donut shape with a hollow interior; and shapes with irregularities provided on surfaces.

Furthermore, through-holes may be appropriately formed for having air permeability.

The method for producing the modified silicone resin foam is not particularly limited, but it is possible that the foamable liquid resin composition is injected into a mold followed by foaming and curing. Alternatively, the foamable liquid resin composition may be foamed before or simultaneously with the curing.

Specifically, the production can be made as described below.

The method for producing the foamable liquid resin composition is not particularly limited, and the base material resin (A), the silanol condensation catalyst (B), and the chemical foaming agent (C), and, if necessary, other optional additives are mixed by stirring to have production. The mixing order is not particularly limited, either, and those components may be mixed together, but it is preferable that the base material resin (A) and the chemical foaming agent (C), and, if necessary, other optional additives are mixed, and the silanol condensation catalyst (B) is finally added to the mixture. When plural base material resins (A) are used in combination, it is preferable that they are added simultaneously. In the case of foaming before curing, for example, pre-expanded thermally expandable microcapsules, the base material resin (A), and, if necessary, other optional additives may be mixed before the silanol condensation catalyst (B) is finally added to the mixture. When plural base material resins (A) are used in combination, it is preferable that they are added simultaneously.

Subsequently, the foamable liquid resin composition is, for example, injected into a mold or dropped onto a substrate placed on a conveyor belt, followed by heating to cause a progress of curing and foaming, whereby the modified silicone resin foam is obtained. The heating temperature and the heating time are not particularly limited, but the modified silicone resin foam of the present invention is obtained by heating, for example, at a temperature of at least 25°C but not more than 250°C, for example, for a period of time of at least 1 minute but not more than 6 hours, and preferably at least 10 minutes but not more than 3 hours.

The modified silicone resin foam has high flexibility and good tactile properties and thus can be used in various applications in which those physical properties can be effectively exhibited. Moreover, from the viewpoint that it does not use any isocyanates, the modified silicone resin foam can be suitably used, for example, as an acoustic insulation material, a damping material, or a cushion material in applications such as transportation equipment, bedclothes and bedding, house furnishings, various types of equipment, building materials, packaging materials, and medical and nursing care.

Examples of the applications in which the modified silicone resin foam can effectively exhibit its excellent tactile properties and flexibility include transportation equipment applications such as: cushion materials, skin materials, and skin backing materials for seats, child seats, head rests, arm rests, foot rests, and headliners for automobiles, construction machinery, railroad vehicles, ships, aircraft or the like, saddles and rider cushions for bikes, bicycles or the like, bed mats for customized vehicles, cushions for camping vehicles, or the like; ceiling materials; core materials, skin materials, and skin backing materials for handles, door trims, instrument panels, dashboards, door panels, pillars, console boxes, quarter trims, sun visors, flexible containers, front mirrors, harnesses, dust covers, or the like; damping and sound absorbing materials for floor cushions, or the like; cushioning materials for helmet linings, crash pads, center pillar garnish, or the like; energy absorbing bumpers; guard acoustic insulation materials; and sponges for vehicle waxing.

Examples of the bedclothes and bedding applications include cushion materials, skin materials, and skin backing materials for pillows, comforters, oriental mattresses, beds, mattresses, bed mats, bed pads, cushions, baby beds, and neck pillows for babies, and the like.

Examples of the home furnishing applications include cushion materials, skin materials, and skin backing materials for various cushions for chairs, legless chairs, floor cushions, sofas, sofa cushions, seat cushions, or the like, carpets and mats, kotatsu carpets and comforters, toilet seat mats, and the like.

Examples of the various equipment applications include sealing and cushioning materials for liquid crystals, electronic parts, or the like, robot skins, electrically conductive cushion materials, antistatic cushion materials, and pressure sensing materials.

Examples of the building material applications include heat insulating materials for floors, roofs, or the like, and shock absorbing materials for floors, walls, or the like. Examples of the packaging material applications include packing materials such as cushioning materials, cushion materials, and shock absorbing materials. Examples of the medical and nursing care applications in which the modified silicone resin foam can also be used include cell sheets for regenerative medicine, artificial skins, artificial bones, artificial cartilages, artificial organs and other biocompatible materials, liquid medicine exuding pads, hemostatic pads, gas-liquid separation filters (filters for indwelling needles), patches, medical liquid absorbing tools, masks, compression pads, surgical disposable products, electrode pads for low frequency therapy equipment, mattresses for preventing bed sores, cushions for postural change, cushions for wheelchairs, seating faces of wheelchairs, nursing care products such as shower chairs, bath support pillows, palm protectors for contracture, taping, liners for plaster casts, liners for artificial limb prosthesis and prosthetic legs, denture pads and other dental products, shock absorbing pads, hip protectors, protectors for elbows and knees, and wound dressings.

Other than those described above, following applications can be mentioned, for example.

As for the application for various types of washing sponges, cleaners for cleaning, cleaners for dish washing, cleaners for body washing, shoe polish cleaners, and cleaners for car washing can be mentioned. As for the application for toiletries, absorbent materials like diapers and sanitary napkins, side gathers, and various liquid filters for or the like can be mentioned.

As for the application for footwear, shoe skin materials, backings, and insoles, shoe sore preventing pads, various shoe pads, inner boots, slippers, slipper cores, sandals, and sandal insoles can be mentioned.

As for the application for cosmetic tools, puffs for cosmetic use and eye shadow applicator tips can be mentioned. As for the application for miscellaneous goods, core materials, cushion materials, skin materials, and skin backing materials for bath products such as bath pillows, massage puffs, mouse pads, arm rests for keyboards, anti-slip cushions, stationery products (pen grips, self-inking stamps), small pillows for use on the desk, earplugs, cotton swabs, sheets for hot packs, sheets for cold packs, poultices, eyeglass pads, pads for swimming goggles, face protectors, pads for wrist watches, ear pads for headphones, earphones, ice pillow covers, foldable pillows, or the like, base materials for double-faced tapes, and adsorption media for fragrances, ink pads, or the like can be mentioned.

As for the application for clothing materials, pad materials for shoulders, brassieres, or the like, and liners and heat insulating materials such as cold protection materials can be mentioned.

As for the application for sports, cushion materials, skin materials, and skin backing materials for protectors for sports, mats for bouldering (climbing rocks with a height of 2 to 3 m, mini rock climbing), kickboards, cushion materials for high jump, landing mats for gymnastics and exercise, mats for kids, or the like, and liners for ski boots, snowboard boots, or the like can be mentioned.

As for the application for toys and playground equipment, cushion materials, stuffing, skin materials, and skin backing materials for hand exercisers, healing goods, key holders, stuffed toys, mannequin bodies, balls, massage balls, or the like, casting materials for molding of specially shaped products such as ornaments or monster figures, or various articles, and for producing models, materials for molding of articles by casting methods, materials for producing model samples using molds, materials for producing ornaments, and special forming and formed products of monster figures can be mentioned.

### EXAMPLES

The present invention is described in greater detail hereinbelow with reference to Examples, but the present invention is not limited to those Examples. The measurements and evaluations in the Examples and Comparative Examples were carried out based on the following conditions and methods.

### <Elongation>

From a molded foam, a No. 2 type dumbbell test specimen was cut out. It had a thickness of about 10 mm, a width of about 10 mm, and an inter-reference point distance of about 25 mm. Next, an elongation test was carried out in a 25°C atmosphere by using a texture analyzer [TA. XT. PluS, manufactured by Eiko Seiki Sangyo K.K.] based on JIS K 6400-5 (Soft foaming materials - Method for determining physical properties - Part 5: Tensile strength, Elongation at break and tear strength) till to have breakage of the test specimen at elongation rate of 500 mm/min. From the obtained load-displacement curve, a stress-strain curve (i.e., S-S curve) was obtained by using the cross-sectional area and inter-reference point distance. From the obtained S-S curve, the maximum elongation (%) was calculated and it was then taken as elongation (%).

### <Flexibility>

In a 25°C atmosphere, an ASKER FP hardness tester (manufactured by Kobunshi Keiki Co., Ltd.) was placed on a flat bottom portion of the prepared modified silicone resin foam, and flexibility was evaluated based on its readings. Since the readings of some samples may decrease over time, the values immediately after the placement of the hardness tester were read.

### <Tactile properties>

The tactile properties obtained when the obtained modified silicone resin foam is compressed by a palm were evaluated according to the following criteria.
Good: The foam is soft and has good tactile properties, and also, when the foam is pressed until bottoming out is felt with the finger and then the finger is transversely slid, transverse deformation can be caused by weak force. It is similar to that of gel materials.
Bad: The foam is pressed until bottoming out is felt with the finger and then the finger is transversely slid, transverse deformation can be caused only by strong force.
Very bad: The foam is pressed until bottoming out is felt with the finger and then the finger is transversely slid, transverse deformation cannot be caused even by strong force.

### <Density of foam>

An approximately 30 mm square cube was cut out from the obtained modified silicone resin foam, and the three dimensions of the cube were measured to calculate the volume (m³), and then the measured weight (kg) of the cube was divided by the volume to calculate the density (kg/m³).

### <Raw materials>

The raw materials used in Examples and Comparative Examples are as follows.

### [Base material resin (A)]

Polymer (a)-1: trimethoxysilyl group-terminated polypropylene oxide polymer, number average molecular weight: 29000, number of reactive silicon groups per molecule: 1.4
Polymer (a)-2: methyldimethoxysilyl group-terminated polypropylene oxide polymer, number average molecular weight: 29000, number of reactive silicon groups per molecule: 1.8 Reactive plasticizer (b): methyldimethoxysilyl group-terminated polypropylene oxide polymer, number average molecular weight: 8000, number of reactive silicon groups per molecule: 0.9

### [Silanol condensation catalyst (B)]

AP-8 (trade name): 2-ethylhexyl acid phosphate, manufactured by Daihachi Chemical Industry Co., Ltd.
VT: tin neodecanoate, U-50 (trade name), manufactured by Nitto Kasei Co., Ltd.
OT: tin octoate, U-28 (trade name), manufactured by Nitto Kasei Co., Ltd.
VA: neodecanoic acid, Versatic 10 (trade name), manufactured by Japan Epoxy Resins Co., Ltd.
2-EHA: 2-ethylhexanoic acid
LA: laurylamine

### [Chemical foaming agent (C)]

Sodium hydrogen carbonate: FE-507 (trade name), manufactured by Eiwa Chemical Ind. Co., Ltd.
Citric acid: citric acid (anhydride) (trade name), manufactured by Iwata Chemical Co., Ltd.

### [Plasticizer]

Polyether polyol: SHP-3900 (trade name), manufactured by Mitsui Chemicals, Inc.

### [Lubricant]

Dimethylpolysiloxane: KF-96-100cs (trade name), manufactured by Shin-Etsu Chemical Co., Ltd.

### (Examples 1 and 2)

A chemical foaming agent (C) was added to a base material resin (A), followed by sufficient mixing. Subsequently, a silanol condensation catalyst (B) was added to the mixture, followed by sufficient mixing. The obtained mixture was injected into a mold and then thermally cured in an oven set at 100°C for 90 minutes to obtain a modified silicone resin foam.

### (Examples 3 and 4)

A chemical foaming agent (C) was added to a base material resin (A), followed by sufficient mixing. After that, a lubricant was mixed into the mixture, and a silanol condensation catalyst (B) was finally added thereto, followed by sufficient mixing. The obtained mixture was injected into a mold and then thermally cured in an oven set at 100°C for 90 minutes to obtain a modified silicone resin foam.

### (Example 5)

A chemical foaming agent (C) was added to a base material resin (A), followed by sufficient mixing. After that, a plasticizer was mixed into the mixture, and a silanol condensation catalyst (B) was finally added thereto, followed by sufficient mixing. The obtained mixture was injected into a mold and then thermally cured in an oven set at 100°C for 90 minutes to obtain a modified silicone resin foam.

### (Comparative Example 1)

First, polyether polyol (1) was produced by the following method based on Example 1 described in Patent Document 1 (Japanese Unexamined Patent Application, Publication No. 2014-162813).

190.63 g (2.51 mol) of 1,3-propanediol obtained by a starch fermentation process {manufactured by Dupont, Susterra (registered trademark) Propanediol} and 9.37 g (0.10 mol) of glycerin were injected to a 300 mL four-necked flask equipped with a condenser, an inlet for nitrogen gas, a mercury thermometer, and a stirrer while supplying nitrogen to the flask at 100 NmL/min. To the resultant, 0.14 g of sodium carbonate was added, and then 2.69 g of conc. sulfuric acid (95%) was slowly added under stirring. The flask was heated by placing it in an oil bath, and the liquid temperature inside the flask was raised to 180°C within an hour or so. The time point at which the liquid inside the flask has a temperature of 180°C was taken as the start point of the reaction, and thereafter, the reaction was allowed to occur for 12 hours while maintaining the liquid temperature at 178 to 182°C. Water produced in accordance with the reaction was distilled off together with nitrogen. The reaction solution cooled to the room temperature was transferred to a 1000 mL two-necked flask containing 200 g of desalted water by using 200 g of 1-butanol, and then gently refluxed for 2 hours to carry out the hydrolysis of the sulfuric acid ester. After cooling to room temperature, the bottom layer of two separated layers (i.e., aqueous layer) was removed. An operation of adding water in an amount of 100 mL to the top layer (oil layer) followed by stirring, and then removing the aqueous layer by allowing it to stand was carried out 2 times to wash the oil layer with water. According to heating to 60°C, 1-butanol and water were distilled off under reduced pressure. The obtained oil layer was vacuum-dried for 8 hours using a vacuum dryer at 120°C, and the resultant was taken as polytrimethylene ether glycol {polyether polyol (1)}. The obtained polyol has hydroxyl value of 110 mgKOH/g, viscosity of 850 mP·s, and number average molecular weight of 1650.

100 Parts (i.e., parts by mass, ditto for the followings) of the above polyether polyol (1) were admixed with 0.1 part of triethylenediamine (Dabco 33LV, manufactured by Chukyo Yushi Co., Ltd.) as a catalyst, 0.21 part of RMH110 (manufactured by Johoku Chemical Co., Ltd.), 3.75 parts of water as a foaming agent, and 0.83 part of silicone surfactant BF-2370 (manufactured by EVONIC) as a surfactant to prepare a resin premix. The resin premix was added with 59.0 parts of TDI (T-80 manufactured by Mitsui Chemical Polyurethanes, Inc.) (INDEX110), stirred by a dynamic mixer, and the mixed solution was added to a 200 mm × 200 mm × 200 mm box for pre-foaming, and a soft polyurethane foam was obtained as a result.

### (Comparative Example 2)

First, hollow particles were produced by the following method based on Synthesis Example 1 and Production Example 1 that are described in Patent Document 2 (Japanese Unexamined Patent Application, Publication No. 2013-237815).

An amount of 120 g of sodium chloride, 100 g of colloidal silica containing 20% by weight of silica as an active ingredient, 1.0 g of polyvinylpyrrolidone, and 1.0 g of a 5% aqueous solution of Na salt of carboxymethylated polyethyleneimine were added to 600 g of ion exchange water, and then the pH of the obtained mixture was adjusted to 2.8 to 3.2 to prepare an aqueous dispersion medium. Separately, 130 g of acrylonitrile, 106 g of methacrylonitrile, and 3 g of methyl methacrylate (all are monomer components), 1.0 g of ethylene glycol dimethacrylate (a crosslinking agent), 50 g of isopentane (a foaming agent, boiling point: 27.7°C), and 1.5 g of azobisisobutyronitrile (a polymerization initiator) were mixed to prepare an oily mixture. The aqueous dispersion medium and the oily mixture were mixed with each other, and the mixture was dispersed for two minutes using a homomixer (TK-Homomixer manufactured by Tokushu Kika Kogyo Co. Ltd., rotation speed: 12000 rpm) to prepare a suspension. The suspension was transferred to a pressure reactor with volume of 1.5 L followed by purging with nitrogen, and then the initial reaction pressure was set at 0.5 MPa, and the polymerization was carried out for 20 hours with stirring at 80 rpm at a polymerization temperature of 70°C. After the polymerization, the obtained polymerization solution was filtered and dried to obtain thermally expandable microcapsules. The obtained thermally expandable microcapsules were expanded to produce hollow particles having a true specific gravity of 0.064 and an average particle size of 39 µm.

An amount of 100 parts by weight of a methyldimethoxysilyl group-terminated polypropylene oxide polymer (trade name Kaneka MS Polymer S203 manufactured by Kaneka Corporation) were mixed with 60 parts by weight of a phthalate plasticizer (trade name DINP manufactured by J-Plus Co. Ltd.), 120 parts by weight of surface-treated colloidal calcium carbonate (trade name Hakuenka CCR manufactured by Shiraishi Kogyo Kaisha, Ltd.), and 2 parts by weight of an anti-sagging agent (trade name Disparlon 6500 manufactured by Kusumoto Chemicals, Ltd.), followed by sufficient kneading, and then, the mixture was dispersed by passing three times through a three-roll paint mill. After that, the mixture was stirred in a mixer under reduced pressure for 2 hours while being heated at 120°C to remove the moisture in the composition, and the moisture content was confirmed to be 500 ppm or less. After that, the composition was cooled to 50°C or lower, and thereto were added 3.63 parts by weight of the hollow particles described above, 2 parts by weight of vinyltrimethoxysilane (trade name Silquest A-171 manufactured by Momentive Performance Materials) as a dehydrating agent, 3 parts by weight of γ-(2-aminoethyl)aminopropyltrimethoxysilane (trade name Silquest A-1120 manufactured by Momentive Performance Materials) as an adhesion-imparting agent, and 1 part by weight of dibutyl tin bisacetyl acetonate (trade name Neostann U-220H manufactured by Nitto Kasei Co., Ltd.) as a curing catalyst, followed by kneading and filling in a sealable container with volume of 330 mL to obtain a curable composition.

### (Comparative Examples 3 to 6)

A chemical foaming agent (C) was added to a base material resin (A), followed by sufficient mixing. After that, a silanol condensation catalyst (B) was added thereto, followed by sufficient mixing. The obtained mixture was injected into a mold and heated in an oven set at 100°C for 90 minutes, but the mixture did not cure.

### (Comparative Example 7)

A silanol condensation catalyst (B) was added to a base material resin (A), followed by sufficient mixing. The obtained mixture was injected into a mold, and then heated and cured in an oven set at 100°C for 90 minutes to obtain a curable composition.

### (Comparative Example 8)

A chemical foaming agent (C) was added to a base material resin (A), followed by sufficient mixing. After that, a silanol condensation catalyst (B) was added thereto, followed by sufficient mixing. Curing has started during the mixing and a cured product was yielded even before heating in an oven.

### (Comparative Example 9)

A chemical foaming agent (C) was added to a base material resin (A), followed by sufficient mixing. After that, a silanol condensation catalyst (B) was added thereto, followed by sufficient mixing. The obtained mixture was injected into a mold, and then heated and cured in an oven set at 100°C for 90 minutes to obtain a modified silicone resin foam.

### (Comparative Examples 10 and 11)

A chemical foaming agent (C) was added to a base material resin (A), followed by sufficient mixing. After that, a lubricant was mixed into the mixture, and a silanol condensation catalyst (B) was finally added thereto, followed by sufficient mixing. The obtained mixture was injected into a mold, and then heated and cured in an oven set at 100°C for 90 minutes to obtain a modified silicone resin foam.

### (Comparative Example 12)

A chemical foaming agent (C) was added to a base material resin (A), followed by sufficient mixing. After that, a lubricant was mixed into the mixture, and a silanol condensation catalyst (B) was finally added thereto, followed by sufficient mixing. The obtained mixture was injected into a mold, and then heated and cured in an oven set at 100°C for 90 minutes, and as a result, it was significantly shrunken so that molding cannot be achieved.

### (Comparative Example 13)

A chemical foaming agent (C) was added to a base material resin (A), followed by sufficient mixing. After that, a plasticizer was mixed into the mixture, and a silanol condensation catalyst (B) was finally added thereto, followed by sufficient mixing. The obtained mixture was injected into a mold, and then heated and cured in an oven set at 100°C for 90 minutes to obtain a modified silicone resin foam.

Raw materials, values of parts by weight for blending, and evaluation results of each Examples and Comparative Examples are shown in Tables 1 and 2. Furthermore, if a sample cannot be produced as the sample for evaluation is torn during cutting or the like, it is described as "impossible to measure."

**[Table 1]**

| Sample name | | | | Example | | | | |
|---|---|---|---|---|---|---|---|---|
| | | | | 1 | 2 | 3 | 4 | 5 |
| Base material | Polymer (a)-1 | | Parts bv | 80 | 90 | 80 | 80 | - |
| resin (A) | | Polymer (a)-2 | weight | - | - | - | - | 90 |
| | | Reactive plasticizer (b) | | 20 | 10 | 20 | 20 | 10 |
| Silanol condensation catalyst (B) | | AP-8 | | 0.5 | 0.5 | 0.5 | 0.5 | 0.5 |
| Foaming agent (C) | | Sodium hydrogen carbonate | | 5 | 5 | 5 | 7.5 | 7.5 |
| | | Citric acid | | 5 | 5 | 5 | 7.5 | 7.5 |
| Other additives | | Plasticizer | | - | - | - | - | 30 |
| | | Lubricant | | - | - | 5 | 5 | 5 |
| Resul ts | Elongation | | % | 449 | 348 | 427 | 391 | 893 |
| | ASKER FP hardness | | - | 0 | 0 | 10 | 0 | 0 |
| | Tactile properties | | - | Good | Good | Good | Good | Good |
| | Density of foam | | Kg/m³ | 227 | 189 | 306 | 217 | 250 |

**[Table 2]**

| Sample name | | | | Comparative example | | | | | | | | | | | | |
|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 |
| Base material resin (A) | | Polymer (a)-1 | Parts by weight | | | 80 | 80 | 80 | 80 | 100 | 100 | 100 | 100 | - | - | 100 |
| | | Polymer (a)-2 | | | | - | - | - | - | - | - | - | - | 100 | 60 | - |
| | | Reactive plasticizer (b) | | | | 20 | 20 | 20 | 20 | - | - | - | - | - | 40 | - |
| Silanol condensation catalyst (B) | | VT/LA | | | | 3/ 0.5 | - | - | - | - | - | - | - | - | - | - |
| | | OT/LA | | | | - | 3/ 0.5 | - | - | - | - | - | - | - | - | - |
| | | VA/LA | | | | - | - | 3/ 0.5 | - | - | - | - | - | - | - | - |
| | | 2-EHA/LA | | | | - | - | - | 3/ 0.5 | - | - | - | - | - | - | - |
| | | AP-8 | | | | - | - | - | - | 0.25 | 10 | 0.5 | 0.5 | 0.5 | 0.5 | 0.6 |
| Foaming agent (C) | | Sodium hydrogen carbonate | | | | 5 | 5 | 5 | 5 | - | 5 | 5 | 5 | 5 | 5 | 6 |
| | | Citric acid | | | | 5 | 5 | 5 | 5 | - | 5 | 5 | 5 | 5 | 5 | 6 |
| Other additives | | Plasticizer | | | | - | - | - | - | - | - | - | - | - | - | 25 |
| | | Lubricant | | | | - | - | - | - | - | - | - | 5 | 5 | 5 | - |
| Results | Elongation | | % | 150 | No data | Not cured | Not cured | Not cured | Not cured | *1 | *2 | 239 | 243 | 383 | *3 | 285 |
| | ASKER FP hardness | | - | No data | >100 | | | | | 81 - | | *1 | *1 | 61 | | 32 |
| | Tactile properties | | - | Very bad | Very bad | | | | | Very bad | | Bad | Bad | Very bad | | - Bad |
| | Density of foam | | Kg/m³ | 25 | 1.04 (g/L) | | | | | *1 | | *1 | *1 | 59 | | 350 |

| | | | | | | | | | | | | | | | | |
|---|---|---|---|---|---|---|---|---|---|---|---|---|---|---|---|---|
| *1: Impossible to measure *2: Not molded (due to curing during mixing) *3: Impossible to evaluate (due to shrinkage after molding) | | | | | | | | | | | | | | | | |

From the results described above, it was found that the foams of Examples have more excellent flexibility, better tactile properties, and higher elongation like 300% or higher compared to those of Comparative Examples. Accordingly, it becomes evident that a modified silicone resin foam which has excellent flexibility and favorable tactile properties, and does not generate hydrogen gas having a high risk of explosion as a byproduct can be provided according to the present invention.

## Claims

1. A modified silicone resin foam obtained by curing a foamable liquid resin composition including 100 parts by weight of a base material resin (A), 0.1 to 5 parts by weight of a silanol condensation catalyst (B), and 2 to 40 parts by weight of a chemical foaming agent (C),
wherein the 100 parts by weight of the base material resin (A) is composed of 65 to 95 parts by weight of a polymer (a) and 5 to 35 parts by weight of a reactive plasticizer (b),
the polymer (a) is composed of a polymer which has 1.0 to 2.0 reactive silicon groups in the molecular chain thereof and has the main chain thereof configured from oxyalkylene-based units,
the reactive plasticizer (b) is composed of a polymer which has 1.0 or fewer reactive silicon groups at one terminal end of the molecular chain thereof and has the main chain thereof configured from oxyalkylene-based units, and
the elongation of the foam is 300 to 1000% in a 25°C atmosphere.

2. The modified silicone resin foam according to claim 1, wherein the polymer (a) is a polymer having number average molecular weight of 3000 or more and 100000 or less.

3. The modified silicone resin foam according to claim 1 or 2, wherein the reactive plasticizer (b) is a polymer having number average molecular weight of 2000 or more and 20000 or less.

4. The modified silicone resin foam according to any one of claims 1 to 3, wherein the silanol condensation catalyst (B) is an acidic organophosphoric acid ester compound.

5. The modified silicone resin foam according to any one of claims 1 to 4, wherein the silanol condensation catalyst (B) is an acidic organophosphoric acid ester compound that is represented by the general formula (1):
(CₘH₂ₘ₊₁O)ₙ-P(=O)(-OH)₃₋ₙ
(in the formula, m is an integer of 4 to 10 and n is an integer of 0 to 3).

6. The modified silicone resin foam according to any one of claims 1 to 5, wherein the chemical foaming agent (C) is any one combination selected from bicarbonates, organic acids, and organic acid salts, bicarbonates and organic acids, and bicarbonates and organic acid salts.

7. The modified silicone resin foam according to claim 6, wherein the organic acids are polyvalent carboxylic acids.

8. The modified silicone resin foam according to claim 6 or 7, wherein the organic acid salts are metal salts of polyvalent carboxylic acids.

9. The modified silicone resin foam according to any one of claims 1 to 8, wherein the foam has density of 10 kg/m3 or more and 900 kg/m3 or less.

10. A method for producing a modified silicone resin foam according to any one of claims 1 to 9.

11. The method for producing a modified silicone resin foam according to claim 10, wherein the foamable liquid resin composition is injected into a mold, and then subjected to foaming and curing.

12. The method for producing a modified silicone resin foam according to claim 10 or 11, wherein the foaming of the foamable liquid resin composition is carried out before or simultaneously with the curing.
